# EUROPÄISCHE PATENTSCHRIFT

(11) **EP 1 618 440 B1**
(45) Veröffentlichungstag und Bekanntmachung des Hinweises auf die Patenterteilung: **29.07.2009**
(21) Anmeldenummer: 04718305.8
(22) Anmeldetag: 08.03.2004
(51) Int. Cl.: G05B 19/045

(54) **Rollendrehtisch und Verfahren zu dessen Betrieb**
Rotary table and method for the operation thereof
Table tournante à roulettes et procédé correspondant pour son opération

(30) Priorität: 17.04.2003 DE 10318169
(43) Veröffentlichungstag der Anmeldung: 25.01.2006
(73) Patentinhaber: SEW-EURODRIVE GmbH & Co. KG, 76646 Bruchsal (DE)
(72) Erfinder: ESCURIOLA ETTINGSHAUSEN, Manuel, 65347 Eltville (DE)
(86) Internationale Anmeldenummer: PCT/EP2004/002328
(87) Internationale Veröffentlichungsnummer: WO 2004/092854

(56) Entgegenhaltungen:
- US-A- 4 104 542
- US-A- 4 318 185
- US-A- 4 799 141
- US-A- 5 596 331
- US-B1- 6 272 398

## Beschreibung

Die Erfindung betrifft einen Rollendrehtisch und ein Verfahren zum Betrieb.

Aus der US 5 596 331 ist ein Rechner mit Echtzeitberechnung bekannt, wobei eine Zustandsmatrix-Steuerung verwendet wird. Dabei ist die interne Struktur des Rechners offenbart, insbesondere einschließlich der internen RTCN Busses, der Daten über Controller an Speichereinheiten versendet, wie auch aus Spalte 3, Zeile 63 - 65 in Zusammenwirkung mit Spalte 4, Zeile 1 - 5 hervorgeht.. Im allgemeinen Sprachgebrauch werden die entsprechenden Teile eines Rechner mit Controller bezeichnet.

Aus der US 4 318 185 ist ein programmierbare Schalteinheit bekannt, die als MOS-Chip herstellbar ist (Spalte 2, Zeile 39 - 42), wobei Ströme von Daten, die Adressinhalt und Dateninhalt umfassen, geleitet werden. Der Chip ist am Eingang eine Mikroprozessors verwendbar und somit von einem Rechner umfasst.

Der Erfindung liegt die Aufgabe zugrunde, die dezentrale Technik in kostengünstiger Weise weiterzubilden und die Wartungszeiten zu verkürzen.

Erfindungsgemäß wird die Aufgabe bei der Anlage nach den in Anspruch 1 und Verfahren zum Betrieb nach den in Anspruch 8 angegebenen Merkmalen gelöst

Wichtige Merkmale der Erfindung sind, dass bei einem Rollendrehtisch, der eine zentrale Steuerung, beispielsweise eine SPS, umfasst, welche über Feldbus mit dezentralen Einheiten verbunden sind, wobei die dezentralen Einheiten jeweils mit Aktoren und Sensoren eines Aggregats verbunden sind und Software, wie beispielsweise SPS-Programme, von der zentralen Steuerung an die dezentralen Einheiten übertragen werden müssen und verwaltet sowie gespeichert werden, für jedes Aggregat eine spezifische Software herzustellen, zu verwalten, zu speichern und bei Inbetriebnahme oder Initialisierung des Rollendrehtisches zu übermitteln ist.

Bei der dezentralen Einheit ist wesentlich, dass sie zumindest einen Rechner, insbesondere einen einen Mikrocontroller umfassenden Rechner umfasst,
wobei die Dezentrale Einheit mit einem Feldbus und einem Versorgungsnetz verbindbar ist,
und wobei die Dezentrale Einheit mit mindestens einem Aktor und mindestens einem Sensor elektrisch verbindbar ist, wobei die Aktoren und Sensoren zusammen einem Aggregat zugeordnet sind,
wobei die Dezentrale Einheit mit Parametern beladbar ist, die
- eine Matrix, insbesondere eine Tabelle, bilden und
- entweder Bedingungen für einen Wechsel des Zustandes des Aggregats in einen nächsten Zustand des Aggregats codieren
- oder auszugebende Information nach Ausführen des Wechsels kennzeichnen.

Von Vorteil ist dabei, dass die Verwaltung und das Speichern komplexer Software, wie SPS-Programme, entfällt. Es muss lediglich noch eine Tabelle oder Matrix von Parametern gespeichert und verwaltet werden und bei der Inbetriebnahme oder Initialisierung der Anlage an die Dezentrale Einheit übermittelt werden. Somit ist auch ein Standard bei der dezentralen Technik erreicht, der ermöglicht, dass verschiedenartige Aggregate mit stets gleichartig aufgebauten dezentralen Steuerungsmodulen verbindbar sind, nämlich mit den dezentralen Einheiten. Die Aggregate sind entweder gleich oder unterscheiden sich wesentlich. Beispielsweise kann ein Aggregat mit einer jeweils verschiedenen Anzahl von Sensoren und mit einem, zwei, drei oder sogar vier Aktoren ausgeführt sein. Dabei ist unter einem Aktor auch ein umrichtergespeister Elektromotor oder Getriebemotor zu verstehen..

Die auszugebende Information ist beispielhaft eine an die zentrale übergeordnete Steuerung gesendete Information. Des Weitem ist dies aber auch ein gesetztes Status-Bit in der dezentralen Einheit oder auch beim Aktor. Die Bedingungen umfassen entweder Signalinformationen eines Sensors oder Status-Informationen eines Umrichters, die vorhanden sein müssen, damit der Wechsel des Zustandes des Aggregats ausgeführt werden darf. Zusätzlich umfassen die Bedingungen auch eine von der zentralen Steuerung zu liefernde Status-Information. Wenn alle, durch die Parameter codierten Bedingungen durch die gelieferten Status-Informationen erfüllt sind, wird der Wechsel ausgeführt und die auszugebenden Informationen, also beispielhaft gesetzte Bits, angepasst..

Bei einer vorteilhaften Ausgestaltung umfasst die auszugebende Information Status-Informationen, die an die zentrale Steuerung übermittelbar ist, und umfasst Kommandos, also Befehle, für einen Aktor. Von Vorteil ist dabei, dass nicht nur Aktoren gesteuert werden sondern auch an die zentrale Steuerung derart Informationen übermittelt werden, dass der Zustand des Aggregats dort bekannt und verarbeitbar ist.

Bei einer vorteilhaften Ausgestaltung beziehen die Bedingungen sich auf Daten, die entweder von der zentralen Steuerung und/oder von den Aktoren und/oder von den Sensoren übermittelbar sind. Von Vorteil ist dabei, dass in Abhängigkeit von den Vorgaben der zentralen Steuerung, den Informationen der Sensoren und Aktoren der Aggregat-Zustand in einfacher Weise steuerbar ist. Darüber hinaus sind ist es auch ermöglicht, als Grundlage für die Bedingungen Zustände der Achsen eines Aggregats vorzusehen. Somit ist der Aggregat-Zustand sogar ohne Vorgaben von Sensoren steuerbar.

Bei einer vorteilhaften Ausgestaltung sind die Matrixelemente zweifach indiziert, wobei der erste Index den Zustand des Aggregats kennzeichnet und der zweite Index eine Bedingung oder eine auszugebende Information kennzeichnet. Von Vorteil ist dabei, dass eine Tabelle von zweifach indizierten Matrixelementen zur Ablaufs-Programmierung bezüglich des Aggregats verwendbar ist.

Bei einer vorteilhaften Ausgestaltung sind zum Auslösen des Zustandswechsels einerseits Zustände der Sensoren und der Aktoren des Aggregats und andererseits von der dezentralen Einheit übermittelte Daten berücksichtigbar. Von Vorteil ist dabei, dass eine genauso vielfältige und flexible Steuerung der Anlage ermöglicht ist wie nach Stand der Technik, wobei allerdings eine viel einfachere Art der Programmierung und Verwaltung der Anlage im Vergleich zum Stand der Technik ermöglicht ist.

Bei einer vorteilhaften Ausgestaltung sind die Zustände des Aggregats eine Sequenz bilden, wobei die umfassten Zustände nacheinander erreichbar Von Vorteil ist dabei, dass alle Zustände des Aggregats parametrierbar und nacheinander erreichbar sind.

Bei einer vorteilhaften Ausgestaltung sind die auszugebende Information und/oder Bedingungen den Aktoren und/oder Sensoren zugeordnet und/oder von der zentralen Steuerung übermittelbar. Von Vorteil ist dabei, dass der zentralen Steuerung der Zustand des Aggregats bekannt ist.

Wesentliche Merkmale der Erfindung sind, dass eine zentrale Steuerung mittels Feldbus mit mindestens einer dezentralen Einheit verbunden ist.. Insbesondere ist ein Bediengerät, umfassend Anzeigemittel, insbesondere Bildschirm, und Eingabemittel, insbesondere Tastatur und Maus, und einen Mikroprozessor, mit der zentralen Steuerung verbindbar. Dabei ist
die Matrix, umfassend ihre zugehörigen Parameterwerte, in einem mit der zentralen Steuerung verbundenen Rechner speicherbar, verwaltbar und/oder abänderbar, wobei jedem Aggregat und der zugehörigen dezentralen Einheit eine eigene Matrix mit zugehörigen Parameterwerten zugeordnet ist..

Von Vorteil ist dabei, dass die Anlage in einfacher Weise und somit kostengünstiger Weise programmierbar ist Außerdem ist das Auftreten von Fehlern verminderbar, weil die Änderung und Anpassung der Software über die Veränderung der Parameter-Werte der Matrix vorgesehen ist. Es muss also nicht komplexe Software verändert werden, sondern nur eine Tabelle. Somit ist weniger Software-Know-how notwendig und auch Bediener mit geringeren Vorkenntnissen sind zur Programmierung der Anlage einsetzbar.

Wesentlich bei dem Verfahren ist, dass bei Inbetriebnahme oder Initialisierung der Anlage Parameterwerte zum Befüllen der jeweils einer dezentralen Einheit spezifisch zugeordneten Matrix von der zentralen Steuerung aus an die jeweilige Dezentrale Einheit übermittelt werden. Der programmtechnische Aufwand zum Erstellen eines Ablaufprogramms ist somit deutlich reduziert. Außerdem wird weniger Speicherplatz zum Speichern der Matrix benötigt als beim Speichern von entsprechenden Software-Modulen notwendig wäre.

Wesentlicher weiterer Vorteil ist, dass ein Standard für eine Dezentrale Einheit geschaffen ist, der ein schnelles und einfaches Austauschen defekter dezentraler Einheiten ermöglicht, die dann unabhängig vom Software-Release ersetzbar sind und mit derselben Tabelle programmierbar sind.

Weitere Vorteile ergeben sich aus den Unteransprüchen.

### Bezugszeichenliste

- A: Aktor
- S: Sensor
- 1: zentrale Steuerung
- 2: Dezentrale Einheit
- 3: Bedien-PC
- 4: Elektromotor
- 5: Elektromotor

Die Erfindung wird nun anhand von Abbildungen näher erläutert:

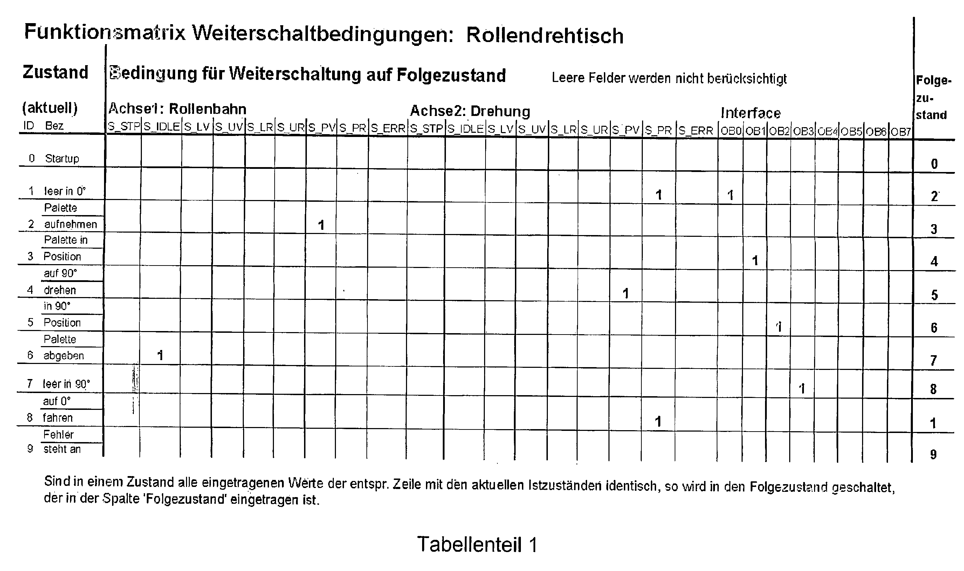

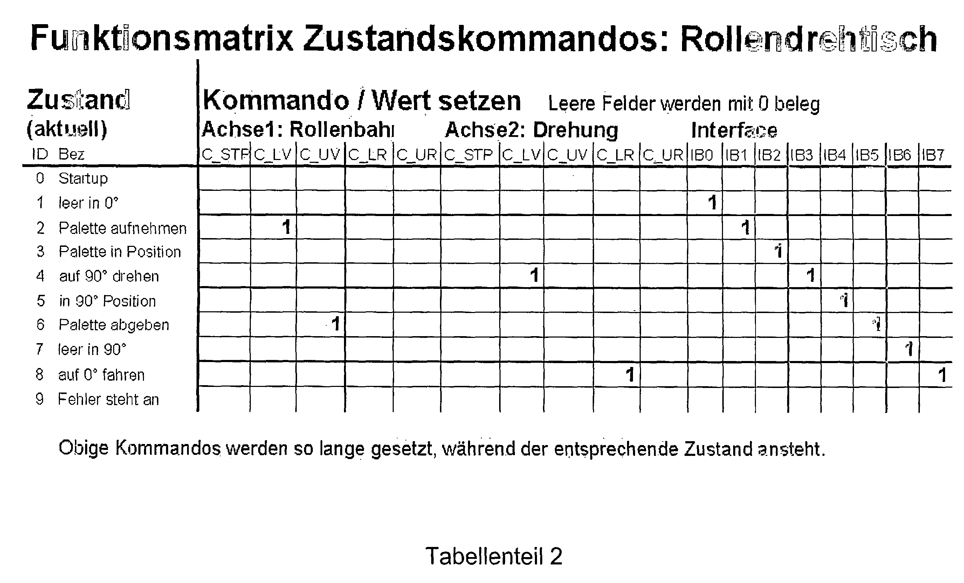

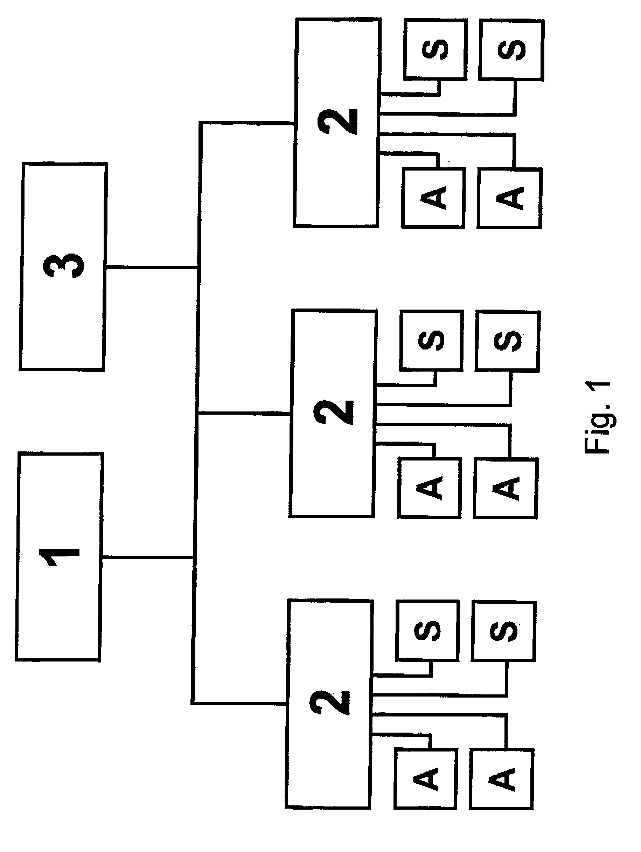

In der Figur 1 ist eine erfindungsgemäße Anlage mit zentraler Steuerung 1 und dezentralen Einheiten 2 skizziert, wobei die zentrale Steuerung 1 mittels Feldbus mit den dezentralen Einheiten 2 verbunden ist

Jede Dezentrale Einheit 2 ist für ein Aggregat vorgesehen, das Aktoren A und Sensoren S umfasst, die mit der dezentralen Einheit elektrisch verbunden sind.

Als Sensoren S sind beispielsweise induktive Näherungsschalter verwendbar

Als Aktoren A sind beispielsweise Linearantriebe oder rotatorische Antriebe verwendbar, die als Elektromotor oder sogar Getriebemotor ausgeführt sind. Der Aktor A kann insbesondere auch einen Umrichter zum Versorgen des Elektromotors umfassen.

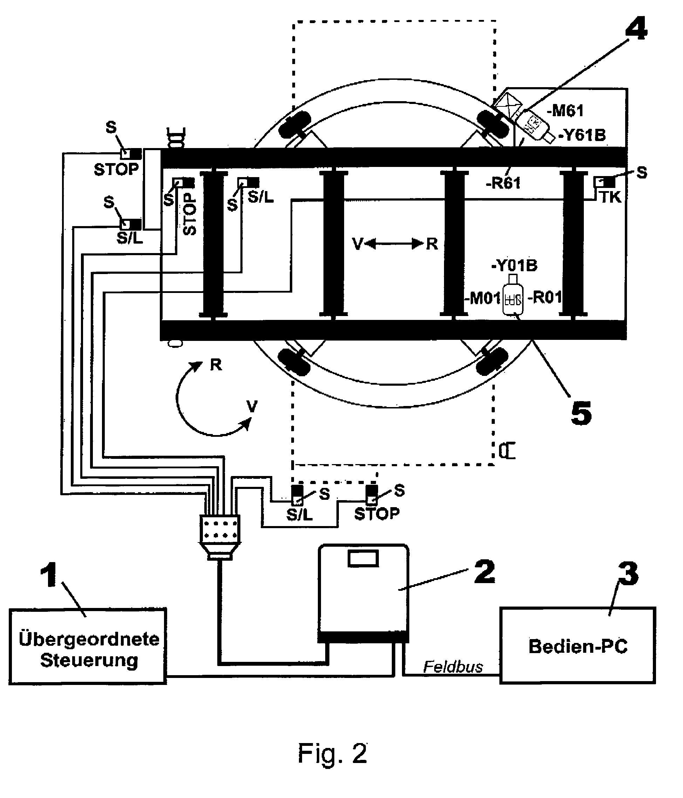

In Figur 2 ist ein beispielhafter Rollendrehtisch gezeigt, der eine mit einem ersten Antrieb angetriebene Rollenbahn und einen mit einem zweiten Antrieb angetriebenen Drehtisch zeigt, wobei diese Antriebe mit den zugehörigen Sensoren ein Aggregat 'Rollendrehtisch' bilden und mit der dezentralen Einheit 2 verbunden sind, die Anschlussvorrichtungen für einen Feldbus umfasst.

Die Dezentrale Einheit 2 ist mit den Umrichtern derart verbunden, dass das Ausführen von Standard-Funktionen ermöglicht ist, wie insbesondere
- Fahren in zwei Drehrichtungen,
- Fahren mit zwei Geschwindigkeiten (zur Positionierung),
- Schnell/Langsam Umschaltung (bei pos /neg. Flanke eines parametrierbaren Gebers),
- Stop (bei pos./neg. Flanke eines parametrierbaren Gebers),
- Teilekontrolle (parametrierbarer Geber, wird in Stop abgefragt),
- Sequenzkontrolle oder
- Laufzeitüberwachung.

Außerdem sind mit der dezentralen Einheit 2 folgende Kommandos ausführbar:
- Stop (Kürzel C_STP)
- Vorwärts aufnehmen / in Position vorwärts fahren (Kürzel C_LV)
- Vorwärts abgeben (Kürzel C_UV)
- Rückwärts aufnehmen / in Position rückwärts fahren (Kürzel C_LR)
- Rückwärts abgeben (Kürzel C_UR )

Es sind somit für jede Achse, also für jeden Aktor mit zugehörigen Sensoren, folgende Zustände erreichbar:
- Stop (Kürzel S_STP)
- Leer (Kürzel S_IDLE)
- Aufnahme / Positionierung vorwärts läuft ( Kürzel S_LV)
- Abgabe vorwärts läuft ( Kürzel S_UV)
- Aufnahme / Positionierung rückwärts läuft ( Kürzel S_LR)
- Abgabe rückwärts läuft ( Kürzel S_UR )
- In Position Vorwärts ( Kürzel S_PV )
- In Position rückwärts ( Kürzel S_PR)
- Fehler ( Kürzel S_ERR)

Als Sensoren sind in anderen erfindungsgemäßen Ausführungsbeispielen auch Encoder, Inkrementalgebern und andere Hilfsmitteln zur Wegmessung/Positionserkennung verwendbar

In den Tabellenteilen 1 und 2, ist ein Beispiel für eine erfindungsgemäße Matrix dargestellt, wobei es sich um eine Tabelle handelt, die der besseren Darstellbarkeit halber in zwei Tabellenteile, also Tabellenteil 1 und Tabellenteil 2, zur leichteren Lesbarkeit aufgebrochen wurde Die Spalte mit den Zuständen ,Startup', ,leer in 0°', ,Palette aufnehmen', ,Palette in Position' und so weiter bilden eine Sequenz von Zuständen, die das Aggregat, beispielhaft ein Rollendrehtisch, nacheinander einnehmen kann. Der Tabellenteil 1 zeigt dabei Bedingungen, die erreicht sein müssen, damit in den nächsten Zustand geschaltet wird. Der Tabellenteil 2 zeigt Kommandos, die während des Zustandes ausgeführt werden.

Die oben genannten Kommandos C und die Output-Daten 1 werden von der dezentralen Einheit 2 generiert aus den Zuständen S und den Informationen O, die von der zentralen Steuerung 1 übermittelt werden. Dieses Generieren erfolgt mittels der Matrix, also der Tabelle. Somit definiert die gesamte Tabelle, wie das System arbeitet und die Matrixelemente, also alle Tabelleneinträge, sind essentiell für den Ablauf und das Arbeiten der gesamten Anlage

Die Dezentrale Einheit sendet Daten, wobei deren Kürzel mit C gekennzeichnet sind Darüber hinaus werden Daten, deren Kürzel mit O beginnt, über Feldbus empfangen und Daten, deren Kürzel mit 1 beginnt, über Feldbus gesendet. Dazu umfasst die Dezentrale Einheit ein Interface, das zwischen Rechner der dezentralen Einheit und Feldbus angeordnet ist.

Das zugehörige beispielhafte Aggregat umfasst hier zwei Achsen, die von mit Umrichtern versorgten Elektromotoren (4,5) antreibbar sind und zugehörige Sensoren S umfassen.

Die Aktor-Parameter für jeden Umrichter umfassen beispielsweise Solldrehzahlprofile und Rampen, wie beispielsweise Solldrehzahl-Verläufe als Funktion der Zeit nach dem Empfang einer entsprechenden Ausiöseinformation für den Umrichter. Außerdem umfassen die Aktor-Parameter darüber hinaus auch weitere Werte.

Die Aktor-Parameter zusammen mit den Parametern, die die Tabelleneinträge, also Matrixelemente, darstellen, werden in einem Bedien-PC (3) gespeichert, verwaltet und von dort an die jeweiligen dezentralen Einheiten 2 gesendet. Dabei werden diese Daten im Bedien-PC (3) zum jeweiligen Aktor zugehörig zugeordnet und abgelegt.

Der Bedien-PC (3) ist in weiteren erfindungsgemäßen Ausführungsbeispielen als tragbarer Laptop ausgeführt oder als ein mit der zentralen Steuerung verbundener, insbesondere über Feldbus verbundener, Rechner, wie PC oder dergleichen, ausgeführt.

Vorteil der Erfindung ist insbesondere, dass die Parameter der Tabelle, also die Matrixelemente, in einem Rechner, insbesondere in einem mit Feldbus verbundenen Rechner, abgelegt und verwaltet werden können. Somit sind keine Software-Pakete, beispielsweise umfangreiche SPS-Programme zu verwalten sondern nur Parameter der Tabelle, also die Matrixelemente. Somit ist die Verwaltung erheblich vereinfacht im Vergleich zu einer Verwaltung von einer Menge von Software-Paketen, die aus je einem Software-Paket für jede dezentrale Einheit (2) besteht, wobei jedes dieser Software-Pakete eine umfangreiche komplexe Struktur haben kann.

Die Erstellung, Diagnose und Verwaltung von Tabellen, also Matrizen, die jeweils einer dezentralen Einheit zugeordnet sind, ist sehr einfach und somit kostengünstig

Bei einem anderen erfindungsgemäßen Ausführungsbeispiel werden die genannten Aktor-Parameter zusammen mit den Parametern, die die Tabelleneinträge, also Matrixelemente, darstellen, in der zentralen Steuerung gespeichert, verwaltet und von dort an die jeweiligen dezentralen Einheiten 2 gesendet.

Bei weiteren erfindungsgemäßen Ausführungsbeispielen sind die Dezentrale Einheit 2 und die die Aktoren A, also beispielsweise Umrichter, in einem Gehäuse, also als integrierte Dezentrale Einheit 2, ausführbar.

Statt Feldbus ist auch in jedem Fall ein Netzwerk verwendbar. Daher soll der Begriff Feldbus in der vorliegenden Schrift auch alle Netzwerke umfassen.

## Patentansprüche

1. Rollendrehtisch,
umfassend eine zentrale Steuerung, einen Feldbus und eine dezentrale Einheit, wobei die zentrale Steuerung mittels Feldbus mit der dezentralen Einheit verbunden ist,
wobei die dezentrale Einheit (2) mit einem Versorgungsnetz verbindbar ist und zumindest einen Rechner umfasst,
und wobei die dezentrale Einheit (2) mit mindestens einem einen Umrichter umfassenden Elektromotor oder Getriebemotor als Aktor (A) und mindestens einem Sensor (S) elektrisch verbindbar ist, wobei die Aktoren (A) und Sensoren (S) zusammen einem Aggregat zugeordnet sind,
wobei die dezentrale Einheit (2) mit Parametern beladbar ist, die
- eine Matrix bilden und
- entweder Bedingungen für einen Wechsel des Zustandes des Aggregats in einen nächsten Zustand des Aggregats codieren
- oder auszugebende Information nach Ausführen des Wechsels kennzeichnen,
wobei die auszugebende Information Status-Informationen, die an eine mit der dezentralen Einheit mittels Feldbus verbundene zentrale Steuerung übermittelbar ist, und Kommandos, also Befehle, für einen Aktor umfasst,
wobei die Bedingungen sich auf Daten, die entweder von der zentralen Steuerung oder von den Aktoren (A) und von den Sensoren übermittelbar sind, oder auf Zustände von Achsen eines Aggregats beziehen,
wobei die Zustände des Aggregats eine Sequenz bilden, wobei die umfassten Zustände nacheinander erreichbar sind..

2. Rollendrehtisch nach mindestens einem der vorangegangenen Ansprüche,
**dadurch gekennzeichnet, dass**
ein Bediengerät, umfassend Anzeigemittel, insbesondere Bildschirm, und Eingabemittel, insbesondere Tastatur und Maus, und einen Mikroprozessor, mit der zentralen Steuerung verbindbar ist.

3. Rollendrehtisch nach mindestens einem der vorangegangenen Ansprüche,
**dadurch gekennzeichnet, dass**
die Matrix, umfassend ihre zugehörigen Parameterwerte, in einem mit der zentralen Steuerung verbundenen Rechner speicherbar, verwaltbar und/oder abänderbar ist, wobei jedem Aggregat und der zugehörigen dezentralen Einheit 2 eine eigene Matrix mit zugehörigen Parameterwerten zugeordnet ist.

4. Rollendrehtisch nach mindestens einem der vorangegangenen Ansprüche,
**dadurch gekennzeichnet, dass**
die Matrixelemente zweifach indiziert sind, wobei der erste Index den Zustand des Aggregats kennzeichnet und der zweite Index eine Bedingung oder eine auszugebende Information kennzeichnet.

5. Rollendrehtisch nach mindestens einem der vorangegangenen Ansprüche,
**dadurch gekennzeichnet, dass**
zum Auslösen des Zustandswechsels einerseits Zustände der Sensoren und der Aktoren des Aggregats und andererseits von der dezentralen Einheit übermittelte Daten berücksichtigbar sind.

6. Rollendrehtisch nach mindestens einem der vorangegangenen Ansprüche,
**dadurch gekennzeichnet, dass**
die auszugebende Information und/oder Bedingungen den Aktoren (A) und/oder Sensoren (S) zugeordnet sind und/oder von der zentralen Steuerung übermittelbar sind.

7. Rollendrehtisch nach mindestens einem der vorangegangenen Ansprüche,
**dadurch gekennzeichnet, dass**
der Sensor (S) ein induktiver Näherungsschalter ist.

8. Verfahren zum Betrieb eines Rollendrehtisches nach mindestens einem der vorangegangenen Ansprüche,
**dadurch gekennzeichnet, dass**
bei Inbetriebnahme oder Initialisierung des Rollendrehtisches Parameterwerte zum Befüllen der jeweils einer dezentralen Einheit spezifisch zugeordneten Matrix von einer einen Rechner umfassenden Vorrichtung aus an die jeweilige dezentrale Einheit (2) übermittelt werden

9. Verfahren nach Anspruch 8,
**dadurch gekennzeichnet, dass**
die einen Rechner umfassende Vorrichtung ein Bedien-PC (3), ein Bediengerät und/oder eine zentrale Steuerung ist.

## Claims

1. Roller rotary table,
comprising a central controller, a field bus and a decentralised unit, the central controller being connected to the decentralised unit by means of the field bus,
the decentralised unit (2) being connectable to a supply network and comprising at least one computer,
and the decentralised unit (2) being electrically connectable to at least one electric motor or geared motor, comprising a converter, as the actuator (A) and at least one sensor (S), the actuators (A) and sensors (S) together being assigned to an assembly,
the decentralised unit (2) being loadable with parameters which
- form a matrix and
- either code conditions for a change of the state of the assembly to a next state of the assembly
- or denote information to be output after the change has been carried out,
the information to be output comprising status information, which can be transmitted to a central controller connected to the decentralised unit by means of the field bus, and commands, i.e. instructions, for an actuator,
the conditions relating to data, which can be transmitted either by the central controller or by the actuators (A) and by the sensors, or relating to states of axes of an assembly,
the states of the assembly forming a sequence, the comprised states being successively reachable.

2. Roller rotary table according to at least one of the preceding claims [sic],
**characterised in that**
an operating device, comprising display means, in particular a screen, and input means, in particular a keyboard and mouse, and a microprocessor, is connectable to the central controller.

3. Roller rotary table according to at least one of the preceding claims,
**characterised in that**
the matrix, comprising its associated parameter values, is storable, manageable and/or alterable in a computer connected to the central controller, a dedicated matrix with associated parameter values being assigned to each assembly and the associated decentralised unit 2.

4. Roller rotary table according to at least one of the preceding claims,
**characterised in that**
the matrix elements are double indexed, the first index denoting the state of the assembly and the second index denoting a condition, or information to be output.

5. Roller rotary table according to at least one of the preceding claims,
**characterised in that,**
in order to trigger the change of state, on the one hand states of the sensors and of the actuators of the assembly and on the other hand data transmitted by the decentralised unit can be taken into account.

6. Roller rotary table according to at least one of the preceding claims,
**characterised in that**
the information to be output and/or conditions are assigned to the actuators (A) and/or sensors (S) and/or are transmittable by the central controller.

7. Roller rotary table according to at least one of the preceding claims,
**characterised in that**
the sensor (S) is an inductive proximity switch.

8. Method for operating a roller rotary table according to at least one of the preceding claims,
**characterised in that**
on startup or initialisation of the roller rotary table, parameter values for filling the matrix specifically assigned to a respective decentralised unit are transmitted from a device comprising a computer to the respective decentralised unit (2).

9. Method according to Claim 8,
**characterised in that**
the device comprising a computer is an operating PC (3), an operating device and/or a central controller.

## Revendications

1. Table tournante à rouleaux,
comprenant une commande centrale, un bus de terrain et une unité décentralisée, la commande centrale étant reliée à l'unité décentralisée par un bus de terrain,
l'unité décentralisée (2) pouvant être reliée à un réseau d'alimentation et comprenant au moins un calculateur,
et l'unité décentralisée (2) pouvant être reliée électriquement à au moins un moteur électrique ou motoréducteur comprenant un variateur de vitesse en tant qu'actionneur (A) et à au moins un capteur (S), les actionneurs (A) et capteurs (S) étant associés ensemble à un agrégat,
l'unité décentralisée (2) pouvant être chargée avec des paramètres qui
- forment une matrice et
- soit codent des conditions pour un changement d'état de l'agrégat dans un prochain état de l'agrégat,
- soit identifient une information à délivrer après exécution du changement.
l'information à délivrer comprenant des informations d'état qui peuvent être transmises à une commande centrale reliée à l'unité décentralisée par un bus de terrain, et des commandes, donc des ordres, pour un actionneur,
les conditions se rapportant à des données qui peuvent être transmises par la commande centrale ou par les actionneurs (A) et par les capteurs, ou à des états d'axes d'un agrégat,
les états de l'agrégat formant une séquence, les états compris étant accessibles successivement.

2. Table tournante à rouleaux selon au moins l'une des revendications précédentes,
**caractérisée en ce**
**qu'**une unité de commande comprenant des moyens d'affichage, en particulier un écran, des moyens d'entrée, en particulier un clavier et une souris, et un microprocesseur peut être reliée à la commande centrale.

3. Table tournante à rouleaux selon au moins l'une des revendications précédentes,
**caractérisée en ce**
**que** la matrice, avec ses valeurs de paramètres, peut être mémorisée, administrée et/ou modifiée dans un calculateur relié à la commande centrale, une matrice spécifique, avec ses valeurs de paramètres, étant associée à chaque agrégat et à l'unité décentralisée 2 correspondante.

4. Table tournante à rouleaux selon au moins l'une des revendications précédentes,
**caractérisée en ce**
**que** les éléments de la matrice sont doublement indicés, le premier indice caractérisant l'état de l'agrégat et le deuxième indice une condition ou une information à délivrer.

5. Table tournante à rouleaux selon au moins l'une des revendications précédentes,
**caractérisée en ce**
**que** pour déclencher le changement d'état, il est possible de tenir compte, d'une part, d'états des capteurs et des actionneurs de l'agrégat et, d'autre part, de données transmises par l'unité décentralisée.

6. Table tournante à rouleaux selon au moins l'une des revendications précédentes,
**caractérisée en ce**
**que** l'information à délivrer et/ou les conditions sont associées aux actionneurs (A) et/ou aux capteurs (S) et/ou peuvent être transmises par la commande centrale.

7. Table tournante à rouleaux selon au moins l'une des revendications précédentes,
**caractérisée en ce**
**que** le capteur (S) est un détecteur de proximité par induction.

8. Procédé d'exploitation d'une table tournante à rouleaux selon au moins l'une des revendications précédentes,
**caractérisé en ce**
**qu'**à la mise en service ou à l'initialisation de la table tournante à rouleaux, des valeurs de paramètres pour remplir la matrice spécifiquement associée à l'unité décentralisée respective sont transmises à l'unité décentralisée (2) respective par un dispositif comprenant un calculateur.

9. Procédé selon la revendication 8,
**caractérisé en ce**
**que** le dispositif comprenant un calculateur est un PC de commande (3), une unité de commande et/ou une commande centrale.
